# EUROPÄISCHE PATENTSCHRIFT

(11) **EP 1 083 071 B1**
(45) Veröffentlichungstag und Bekanntmachung des Hinweises auf die Patenterteilung: **24.10.2007**
(21) Anmeldenummer: 00118356.5
(22) Anmeldetag: 24.08.2000
(51) Int. Cl.: B60J 7/12

(54) **Verdeckelement eines Cabrioverdecks und Cabrioverdeck**
Convertible vehicle soft top element and convertible vehicle soft top
Elément de capote de voiture convertible et capote de voiture convertible

(30) Priorität: 27.08.1999 DE 19940935
(43) Veröffentlichungstag der Anmeldung: 14.03.2001
(73) Patentinhaber: Webasto AG, 82131 Stockdorf (DE)
(72) Erfinder: Schütt, Thomas, 82256 Fürstenfeldbruck (DE)
(74) Vertreter: Wiese, Gerhard

(56) Entgegenhaltungen:
- EP-A- 0 699 549
- FR-A- 2 601 906
- US-A- 4 552 401
- US-A- 5 673 959

## Beschreibung

Die Erfindung betrifft ein Verdeckelement eines Cabrioverdecks gemäß dem Oberbegriff des Anspruchs 1 sowie ein Cabrioverdeck.

Bei derzeitigen Verdecken von Cabriolets, insbesondere bei Faltverdecken, werden Einzelteile des Verdeckgestänges wie z. B. Dachlenker, Steuerlenker, Querspriegel, Frontspriegel, Dachspitze, Hauptsäule, Hauptlenker oder Spannbügel aus Metall mittels Stanz-, Tiefzieh-, Druckguß-, Streckbiege- oder Schmiedeverfahren hergestellt. Derartige Metallteile weisen jedoch ein hohes Gewicht auf und können, falls es zu einem Bruch des Teils kommt, durch entstehende Splitter eine Verletzungsgefahr bilden, wobei Splitterbrüche insbesondere bei Aluminium- und Magnesiumdruckgußteilen auftreten. Die Metallteile erfordern des weiteren einen Korrosionsschutz und sie sind nicht deko-fähig, so daß separate optische Abdeckungen benötigt werden. Damit entstehen hohe Herstellungskosten für ein mit diesen Bauteilen erstelltes Cabrioverdeck. Darüber hinaus weisen insbesondere als einschalige Gußteile gebildete Verdeckgestängeteile eine nur geringe Biege- und Torsionssteifigkeit auf.

Aus der FR 2 601 906 A1 ist ein gattungsgemäßes Verdeckelement eines Cabrioverdecks bekannt, das aus einem Kunststoffbauteil und aus einem Blechteil als Verbundbauteil gebildet ist. Das Verdeck- oder Dachelement enthält ein plattenförmiges Teil, das mit einem randseitigen Rahmen fest verbunden ist, wobei sowohl das plattenförmige Teil wie auch der randseitige Rahmen aus Metall oder aus Kunststoff hergestellt sein können und ein trägerförmiges Verbundbauteil mit einer Hohlraumstruktur bilden. Das trägerförmige Verbundbauteil in der Art eines Dachlängsholmes muß bestimmungsgemäß mit einer vergleichsweise großen Wandstärke gebildet sein, um die erforderliche hohe Festigkeit dieses Bauteils bereitzustellen.

Die US 5,672,959 offenbart ein Fahrzeug mit einem Verdeck und einem schwenk- oder klappbaren Verdeckgestänge, das einen flexiblen Verdeckstoff lagert. Das Verdeckgestänge kann aus Kunststoff und/oder Metall hergestellt sein und enthält diverse klappbare Spriegel.

Die US 4,552,401 zeigt ein Faltverdeck mit Spriegeln, die abwechselnd als formsteife Spriegel und elastische Spriegel gebildet sind. Die formsteifen Spriegel sind als Blechpressteile gebildet, während die elastischen Spriegel aus Kunststoff hergestellt sind und vorzugsweise ein Hohlkammerprofil aufweisen.

Die EP 0 699 549 A1 zeigt ein Faltverdeck mit einem Verdeckgestell, das aus Metall, Kunststoff oder Holz hergestellt sein kann.

Aufgabe der Erfindung ist es, ein Verdeckelement für ein Cabrioverdeck zu schaffen, das eine hohe Festigkeit bei geringem Gewicht aufweist und dennoch mit vergleichsweise geringen Kosten herstellbar ist. Eine weitere Aufgabe der Erfindung ist es, ein Cabrioverdeck zu schaffen, das zumindest ein derartiges Verdeckelement aufweist.

Die erstgenannte Aufgabe wird erfindungsgemäß durch ein Verdeckelement mit den Merkmalen des Anspruchs 1 gelöst. Eine derartige Verbundkonstruktion bietet die Möglichkeit der Kombination der Vorteile von Blech mit denen von Kunststoff und führt bei den erfindungsgemäß vorgeschlagenen Verdeckteilen zu einer Gewichtseinsparung bei zumindest gleichbleibender oder sogar erhöhter Biege- und Torsionssteifigkeit. Kunststoff bietet zugleich den Vorteil, daß ein Korrosionsschutz nicht erforderlich ist und daß gewünschte Einfärbungen und Oberflächenstrukturen unmittelbar bei der Herstellung berücksichtigt werden können.

Des weiteren enthält das Kunststoffbauteil Verstärkungen und insbesondere Versteifungsrippen. Wenn die Versteifungsrippen bis an die Dachkontur reichen, können sie als Anlage und Stütze für das Blechteil dienen.

Vorteilhafte Ausgestaltungen der Erfindung sind in den Unteransprüchen angegeben.

Ein erhöhte Bauteilfestigkeit des Verdeckelements wird insbesondere dadurch erreicht, daß wesentliche Bereiche des Kunststoffbauteils und des Blechteils voneinander beabstandet sind und eine steife Hohlraumstruktur bilden. Die wesentlichen Bereiche werden in Abhängigkeit von der Bauteilform unter Berücksichtigung der Festigkeitsanforderungen festgelegt und können je nach Art des Verdeckelements an unterschiedlichen Stellen des Verdeckelements sein. Vorzugsweise bilden diese wesentlichen, beabstandeten Bereiche den überwiegenden Größenanteil des Kunststoffbauteils bzw. des gesamten Verdeckelements.

Wenn das Kunststoffbauteil und das Blechteil ein dünnwandiges Verbundteil mit zumindest einem großvolumigen Hohlraum bilden, so kann ein besonders leichtes Verbundbauteil gebildet werden, das dennoch hohe Festigkeitsanforderungen erfüllt. Dabei ist die Größe des gesamten Bauteils und insbesondere seine Ausdehnung am größten Querschnitt des Hohlraumes lediglich von dem verfügbaren Raumangebot für das geschlossene und offene Cabrioverdeck begrenzt.

Zweckmäßigerweise ist das Blechteil mit dem Kunststoffbauteil durch Kleben, Einclinchen oder Vergießen verbunden, wobei auch beliebige andere Verbindungs- und Fügetechniken verwendet werden können.

Das Blechteil kann z. B. durch Tiefziehen in die erforderliche Form gebracht worden sein. Das Blech kann besonders dünn und damit auch leicht sein, da es seine Stützfunktion erst in Anordnung an dem Verbundteil ausübt. Das Kunststoffbauteil kann als Spritzgußteil, Tiefziehteil oder Laminatteil hergestellt sein, wodurch eine große Freiheit bei der Formgebung gewährleistet ist und auch die für das Anbringen des Blechs erforderlichen Anlageflächen optimal geformt werden können.

Für den Aufbau des Verbundteils können unterschiedliche Anordnungen des Blechteils und des Kunststoffbauteils gewählt werden. So kann das Blechteil die Unter- oder Innenseite und das Kunststoffbauteil die Ober- oder Außenseite des Verbundteils des Cabrioverdecks, insbesondere in seiner Anordnung bei geschlossenem Cabrioverdeck, bilden. Anderseits kann auch das Kunststoffbauteil die Unter- oder Innenseite und das Blechteil die Ober- oder Außenseite des Verbundteils bilden. Die Anordnung wird im wesentlichen unter Berücksichtigung der Anbringung eines Dekors sowie dem Bruchverhalten der jeweils verwendeten Werkstoffe wie insbesondere des Kunststoffes gewählt. Ein hochfester, aber splitternd brechender Kunststoff wird an die Verdeckaußenseite gelegt und wird von einem Blech nach innen zu den Fahrgästen hin abgedeckt.

Vorzugsweise ist das Verdeckelement ein Frontspriegel des Cabrioverdecks, wobei das Kunststoffbauteil ein Frontspriegelunterteil und das Blechteil ein Frontspriegeloberteil ist.

Zur Erhöhung der Festigkeit ist es zweckmäßig, wenn das Kunststoffbauteil des Frontspriegels einen im wesentlichen U-förmigen Querkanal aufweist. In diesen Querkanal können zusätzliche Bauteile wie Verriegelungseinrichtungen oder Antriebe aufgenommen und integriert sein.

In das Verbundteil können weitere Bauteile integriert sind wie z. B. Blenden, Drehpunkte für Lenker, Aufnahmen für Verschlüsse, Klinkenhaken und dergleichen. In dem Kunststoffbauteil können Aufnahmen für Gelenklager von Lenkern oder Führungen ausgebildet sind.

Des weiteren können Zusatzblechteile in das Kunststoffbauteil eingelegt oder integriert sein, die mit dem Blechteil direkt verbunden werden können.

Für das Kunststoffbauteil können unterschiedliche Kunststoffe wie z. B. Polyamid (PA6.6) verwendet werden, wobei das Kunststoffbauteil insbesondere aus einem Kunststoff mit einem im wesentlichen splitterfreien Bruchverhalten gebildet ist, wenn es zum Fahrzeuginnenraum hin gerichtet ist.

Als Verdeckelement kommt zweckmäßigerweise auch ein Verdeckgestängeteil, wie insbesondere ein Dachlenker, ein Steuerlenker, eine Hauptsäule, ein Querspriegel, ein Frontspriegel oder eine Dachspitze oder ein aus zumindest zwei dieser Gestängeteile kombiniertes Teil in Betracht, wobei sich hier die Vorteile der Verbundkonstruktion mit einem Kunststoffbauteil aufgrund der Gestaltungsfreiheit besonders positiv auswirken.

Die zweitgenannte Aufgabe wird erfindungsgemäß durch ein Cabrioverdeck mit den Merkmalen des Anspruchs 17 gelöst, wobei das Verdeckelement gemäß den obigen Ausführungen ausgebildet ist und insbesondere ein Dachlenker, ein Steuerlenker, eine Hauptsäule, ein Querspriegel, ein Frontspriegel oder eine Dachspitze ist.

Nachfolgend werden Ausführungsbeispiele der Erfindung unter Bezugnahme auf Zeichnungen näher erläutert. Es zeigt:
- Fig. 1: in einer perspektivischen Oberansicht in Explosionsdarstellung die rechte Hälfte eines Frontspriegels eines Cabrioverdecks mit einem unteren Kunststoffbauteil und einem oberen Deckblech;
- Fig. 2: einen Längsquerschnitt des Frontspriegels in schematischer Darstellung;
- Fig. 3: in einer perspektivischen Unteransicht den rechten Randbereich des Frontspriegels;
- Fig. 4: in einer perspektivischen Draufsicht eine Hauptsäule eines Cabrioverdecks;
- Fig. 5: in einer perspektivischen Oberansicht einen Mittelspriegel mit einem daran angeformten seitlichen Dachlenker des Cabrioverdecks;
- Fig. 6: eine Querschnittsansicht der in Fig. 4 dargestellten Hauptsäule; und
- Fig. 7: eine Querschnittsansicht des dargestellten Dachlenkers entlang der Schnittfläche
A - A in Fig. 5.

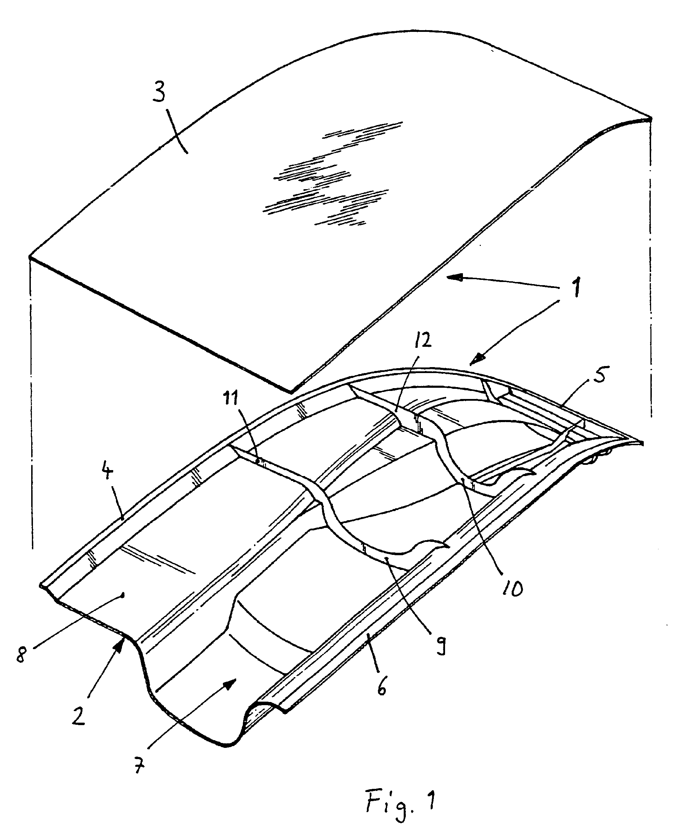

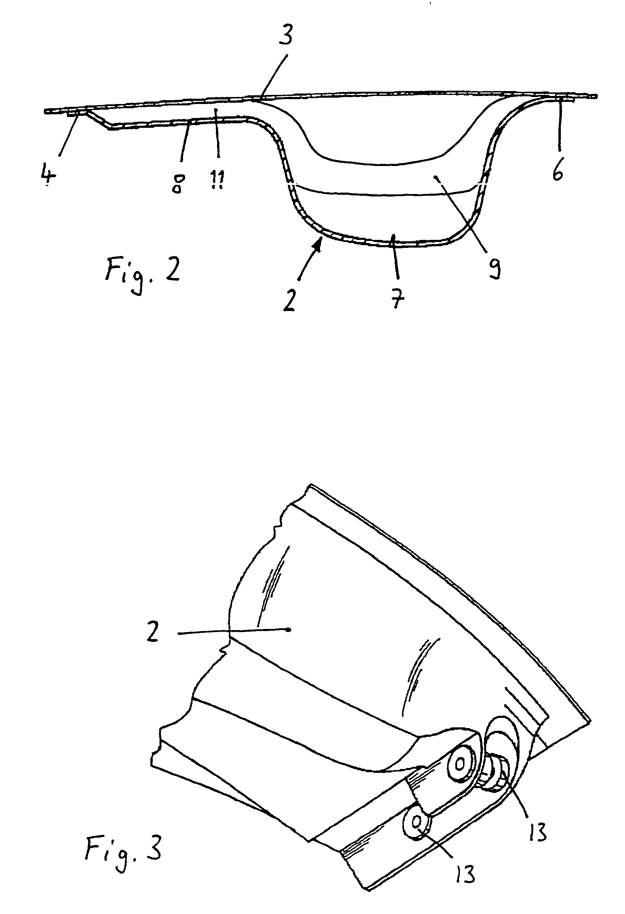

Ein Frontspriegel 1 eines Cabrioverdecks enthält ein Kunststoffbauteil 2 als Unterteil und ein darauf angebrachtes schalenartiges Blechteil 3 aus Stahl- oder Aluminiumblech als Oberteil (siehe Fig. 1 und 2). Das Kunststoffbauteil 2 weist eine Vorderrandfläche 4, eine Seitenrandfläche 5 und eine Hinterrandfläche 6 auf, die die Form der Dachkontur festlegen und an denen das entsprechend der Dachkontur in gewölbte oder bombierte Form gebrachte Blechteil 3 aufliegt und befestigt, insbesondere verklebt ist. Damit ist der Frontspriegel 1 als Verbundteil aus dem Kunststoffteil 2 und dem Blechteil 3 gebildet.

Das Kunststoffbauteil 2 enthält einen im Längsquerschnitt in etwa U-förmig vertieften Querträgerabschnitt 7, der sich im wesentlichen über die gesamte Breite des Frontspriegels 1 erstreckt und dem Verbundteil aufgrund des voluminösen Kastenhohlprofils eine hohe Biege- und Torsionssteifigkeit verleiht. Dabei kann im Mittelbereich des Frontspriegels 1 der Querträgerabschnitt 7 eine stärker ausgebildete Vertiefung aufweisen, um auch in diesem Bereich hoher Beanspruchung eine ausreichende Steifigkeit zu bieten.

Ein vorderer Abschnitt des Kunststoffbauteils 2 ist als von der Vorderrandfläche 4 abgesetzte flache Vertiefung 8 gebildet, die aufgrund ihres Abstandes zum Blechteil 3 auch zur Bauteilfestigkeit beiträgt. Ein oder mehrere Längsstege 9 und 10 sind auf der Innenseite 11 des Kunststoffbauteils 2 ausgebildet und erstrecken sich von der Vorderrandfläche 4 zu der Hinterrandfläche 6. Sie versteifen das Kunststoffbauteil 2 und bieten zusätzlich in einem Vorderabschnitt 11 bzw. 12 eine Auflage und Abstützung für das Blechteil 3, das daran entweder nur aufliegt oder auch verklebt ist. Zusätzliche Versteifungsrippen können in hochbeanspruchten Bauteilbereichen vorgesehen sein.

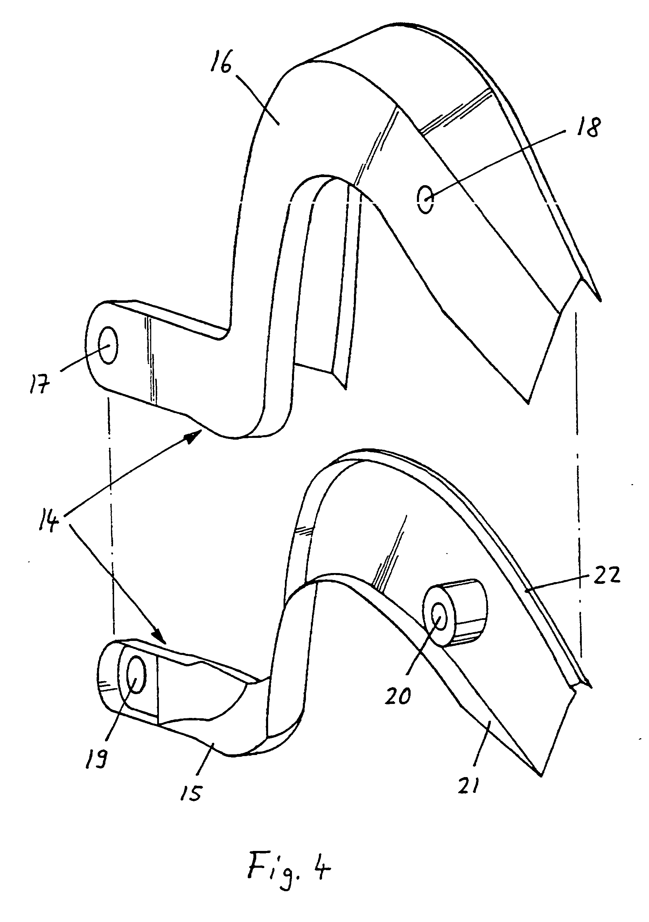

Die zum Bewegen des Frontspriegels 1 beim Öffnen und Schließen des Cabrioverdecks vorgesehenen Anlenkpunkte 13 (siehe Fig. 3) oder Lenkerlager für Hilfslenker an den beiden gegenüberliegenden Seiten des Frontspriegels 1 sind als Metall- oder Blechteile beim Herstellen des Kunststoffbauteils 2 eingearbeitet und als Einlegeteile integriert oder nachträglich in entsprechende Ausnehmungen eingesetzt, die in das Kunststoffbauteil 2 eingeformt oder durch nachträgliche Bearbeitung in diesem hergestellt sind.

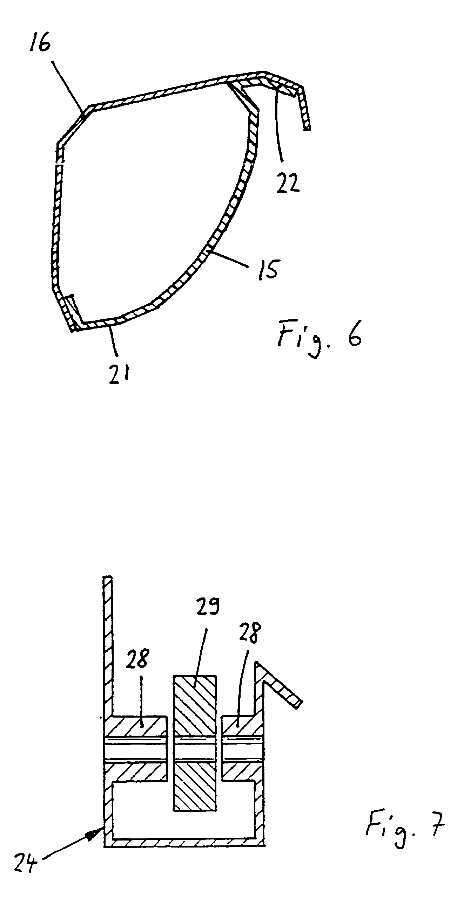

Als weiteres Verdeckelement ist eine Hauptsäule 14 (siehe Fig. 4) des Cabrioverdecks aus einem Kunststoffteil 15 und einem damit verklebten Blechformteil 16 als Verbundteil hergestellt. Lagerbohrungen 17 und 18 im Blechformteil 16 dekken sich mit zugeordneten, durch Ausformungen versteiften Öffnungen 19 bzw. 20 an dem Kunststoffteil 15 und nehmen Verbindungsgelenke für seitliche Dachlenker auf. Die Verbindung des Kunststoffteils 15 mit dem Blechformteil 16 erfolgt an Randabschnitten 21 und 22 des Kunststoffteils 15 (siehe Fig. 6). Durch den voluminösen Hohlraumquerschnitt der Hauptsäule 14 wird auch bei diesem Verbundteil eine hohe Biege- und Torsionssteifigkeit erzielt.

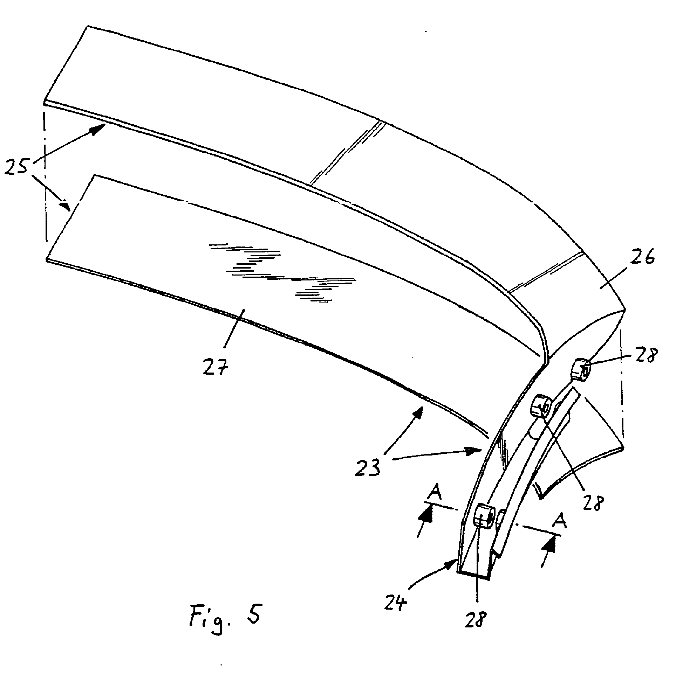

Ein weiteres Beispiel eines als Verbundteil gebildeten Verdeckelements ist in Fig. 5 in einer Halbansicht dargestellt und zeigt eine Dachbaugruppe 23, die jeweils einen seitlichen Dachlenker 24 und einen die Dachlenker 24 verbindenden Spriegel 25, z. B. einen Mittel- oder Hauptspriegel des Cabrioverdecks, enthält, der aus einem mit den seitlichen Dachlenkern 24 einstückig gebildeten Kunststoffteil 26 und einem Blechteil 27 besteht, das von unten an das Kunststoffteil 26 geklebt ist. Das Kunststoffteil 26 ist aus einem hochfesten Kunststoff hergestellt. Um einen Fahrzeuginsassen im Crashfall vor spitzen Bruchstücken des Kunststoffes zu schützen, ist bei diesem Verbundteil das Blechteil 27 auf der dem Fahrgastraum zugewandten Unterseite des Kunststoffteils 15 befestigt. In dem Dachlenker 24 sind Lageraufnahmen 28 für Gelenkverbindungen mit Lenkern 29 (siehe auch Fig. 7) ausgebildet. Das kastenförmige Profil des Dachlenkers 24 bietet die erforderliche Biege- und Torsionssteifigkeit.

## Patentansprüche

1. Verdeckelement eines Cabrioverdecks, das aus einem Kunststoffbauteil (2; 15; 26) und aus einem Blechteil (3; 16; 27) als Verbundbauteil gebildet ist
**dadurch gekennzeichnet,**
**daß** in dem Kunststoffbauteil (2; 15; 26) einteilig mit diesem gebildete Lageraufnahmen für Gelenklager von Lenkern oder Führungen ausgebildet sind.

2. Verdeckelement nach Anspruch 1,
**dadurch gekennzeichnet, daß** wesentliche Bereiche des Kunststoffbauteils (2; 15; 26) und des Blechteils (3; 16; 27) voneinander beabstandet sind und eine steife Hohlraumstruktur bilden.

3. Verdeckelement nach Anspruch 2,
**dadurch gekennzeichnet, daß** die wesentlichen, beabstandeten Bereiche den überwiegenden Größenanteil des Kunststoffbauteils (2; 15; 26) bzw. des Verdeckelements bilden.

4. Verdeckelement nach einem der Ansprüche 1 bis 3,
**dadurch gekennzeichnet, daß** das Kunststoffbauteil (2; 15; 26) und das Blechteil (3; 16; 27) ein dünnwandiges Verbundteil mit zumindest einem großvolumigen Hohlraum bilden.

5. Verdeckelement nach einem der Ansprüche 1 bis 4,
**dadurch gekennzeichnet, daß** das Blechteil (3; 16; 27) mit dem Kunststoffbauteil (2; 15; 26) durch Kleben, Clinchen oder Vergießen verbunden ist.

6. Verdeckelement nach einem der Ansprüche 1 bis 5,
**dadurch gekennzeichnet, daß** das Blechteil (3; 16; 27) als Tiefziehteil hergestellt ist.

7. Verdeckelement nach einem der Ansprüche 1 bis 6,
**dadurch gekennzeichnet, daß** das Kunststoffbauteil (2; 15; 26) als Spritzgußteil, Tiefziehteil oder Laminatteil hergestellt ist.

8. Verdeckelement nach einem der Ansprüche 1 bis 7,
**dadurch gekennzeichnet, daß** das Blechteil (3; 16; 27) die Unter- oder Innenseite und das Kunststoffbauteil (2; 15; 26) die Ober- oder Außenseite des Verbundteils des Cabrioverdecks, insbesondere in seiner Anordnung bei geschlossenem Cabrioverdeck, bildet.

9. Verdeckelement nach einem der Ansprüche 1 bis 7,
**dadurch gekennzeichnet, daß** das Kunststoffbauteil (2; 15; 26) die Unter- oder Innenseite und das Blechteil (3; 16; 27) die Ober- oder Außenseite des Verbundteils des Cabrioverdecks, insbesondere in seiner Anordnung bei geschlossenem Cabrioverdeck, bildet.

10. Verdeckelement nach einem der Ansprüche 1 bis 9,
**dadurch gekennzeichnet, daß** es ein Frontspriegel (1) des Cabrioverdecks ist und daß das Kunststoffbauteil (2) ein Frontspriegelunterteil und das Blechteil (3) ein Frontspriegeloberteil ist.

11. Verdeckelement nach Anspruch 10,
**dadurch gekennzeichnet, daß** das Kunststoffbauteil (2) des Frontspriegels (1) einen im wesentlichen U-förmigen Querkanal (7) aufweist.

12. Verdeckelement nach einem der Ansprüche 1 bis 11,
**dadurch gekennzeichnet, daß** das Kunststoffbauteil (2) Verstärkungen und insbesondere Versteifungsrippen (9, 10) aufweist.

13. Verdeckelement nach einem der Ansprüche 1 bis 12,
**dadurch gekennzeichnet, daß** in das Verbundteil weitere Bauteile integriert sind.

14. Verdeckelement nach einem der Ansprüche 1 bis 13,
**dadurch gekennzeichnet, daß** ein Zusatzblechteil in das Kunststoffbauteil (2; 15; 26) eingelegt oder integriert ist.

15. Verdeckelement nach einem der Ansprüche 1 bis 14,
**dadurch gekennzeichnet, daß** das Kunststoffbauteil (2; 15; 26) aus einem Kunststoff mit einem im wesentlichen splitterfreien Bruchverhalten gebildet ist.

16. Verdeckelement nach einem der Ansprüche 1 bis 15,
**dadurch gekennzeichnet, daß** es ein Verdeckgestängeteil wie insbesondere ein Dachlenker, ein Steuerlenker, eine Hauptsäule, ein Querspriegel, ein Frontspriegel oder eine Dachspitze oder ein aus zumindest zwei dieser Gestängeteile kombiniertes Teil ist.

17. Cabrioverdeck mit zumindest einem Verdeckelement, das aus einem Kunststoffbauteil (2; 15; 26) und aus einem Blechteil (3; 16; 27) als Verbundbauteil gebildet ist,
**dadurch gekennzeichnet, daß** das Verdeckelement nach einem der Ansprüche 1 bis 16 gebildet ist und insbesondere ein Dachlenker, ein Steuerlenker, eine Hauptsäule, ein Querspriegel, ein Frontspriegel oder eine Dachspitze ist.

## Claims

1. Convertible vehicle soft top element, which is formed from a plastic component (2; 15; 26) and from a sheet metal part (3; 16; 27) as a composite component, **characterized in that** bearing receptacles for hinged bearings of plants or guides are formed in the plastic component (2; 15; 26), in one piece therewith.

2. Soft top element according to Claim 1, **characterized in that** important regions of the plastic component (2; 15; 26) and of the sheet metal part (3; 16; 27) are spaced apart from one another and form a stiff cavity structure.

3. Soft top element according to Claim 2, **characterized in that** the important, spaced regions form the major predominant proportion of the plastic component (2; 15; 26) or of the soft top element.

4. Soft top element according to one of Claims 1 to 3, **characterized in that** the plastic component (2; 15; 26) and the sheet metal part (3; 16; 27) form a thin-walled composite part having at least one large-volume cavity.

5. Soft top element according to one of Claims 1 to 4, **characterized in that** the sheet metal part (3; 16; 27) is joined to the plastic component (2; 15; 26) by adhesive bonding, clinching or casting.

6. Soft top element according to one of Claims 1 to 5, **characterized in that** the sheet metal part (3; 16; 27) is produced as a deep drawn part.

7. Soft top element according to one of Claims 1 to 6, **characterized in that** the plastic component (2; 15; 26) is produced as an injection moulding, deep drawn part or laminated part.

8. Soft top element according to one of Claims 1 to 7, **characterized in that** the sheet metal part (3; 16; 27) forms the underside or inner side and the plastic component (2; 15; 26) forms the upper or outer side of the composite part of the convertible vehicle soft top, in particular in its arrangement with the convertible vehicle soft top closed.

9. Soft top element according to one of Claims 1 to 7, **characterized in that** the plastic component (2; 15; 26) forms the underside or inner side and the sheet metal component (3; 16; 27) forms the upper or outer side of the composite part of the convertible vehicle soft top, in particular in its arrangement with the convertible vehicle soft top closed.

10. Soft top element according to one of Claims 1 to 9, **characterized in that** it is a front bow (1) of the convertible vehicle soft top, and **in that** the plastic component (2) is a lower part of the front bow and the sheet metal part (3) is an upper part of the front bow.

11. Soft top element according to Claim 10, **characterized in that** the plastic component (2) of the front bow (1) has a substantially U-shaped transverse channel (7).

12. Soft top element according to one of Claims 1 to 11, **characterized in that** the plastic component (2) has reinforcements and in particular stiffening ribs (9, 10).

13. Soft top element according to one of Claims 1 to 12, **characterized in that** further components are integrated into the composite part.

14. Soft top element according to one of Claims 1 to 13, **characterized in that** an additional sheet metal part is inserted or integrated into the plastic component (2; 15; 26).

15. Soft top element according to one of Claims 1 to 14, **characterized in that** the plastic component (2; 15; 26) is formed from a plastic with a substantially splinter-free fracture behaviour.

16. Soft top element according to one of Claims 1 to 15, **characterized in that** it is a soft top linkage part such as in particular a roof rod, a control rod, a main column, a transverse bow, a front bow or a roof tip or a part combined from at least two of these linkage parts.

17. Convertible vehicle soft top having at least one soft top element which is formed from a plastic component (2; 15; 26) and from a sheet metal part (3; 16; 27) as a composite component, **characterized in that** the soft top element is formed in accordance with one of Claims 1 to 16 and is in particular a roof rod, a control rod, a main column, a transverse bow, a front bow or a roof tip.

## Revendications

1. Élément de capote d'une capote de voiture décapotable, qui est constitué d'un élément en matière plastique (2 ; 15 ; 26) et d'un élément en tôle (3 ; 16 ; 27) en tant qu'élément composite, **caractérisé en ce que** des logements de palier pour des paliers d'articulation de bras ou de glissières, qui font corps avec l'élément en matière plastique, sont réalisés dans ledit élément en matière plastique (2 ; 15 ; 26).

2. Élément de capote selon la revendication 1, **caractérisé en ce que** les parties essentielles de l'élément en matière plastique (2 ; 15 ; 26) et de l'élément en tôle (3 ; 16 ; 27) sont espacées les unes des autres et forment une structure creuse rigide.

3. Élément de capote selon la revendication 2, **caractérisé en ce que** les parties essentielles espacées constituent la majeure partie de l'élément en matière plastique (2 ; 15 ; 26) ou de l'élément de capote.

4. Élément de capote selon l'une des revendications 1 à 3, **caractérisé en ce que** l'élément en matière plastique (2 ; 15 ; 26) et l'élément en tôle (3 ; 16 ; 27) forment un élément composite à paroi mince comprenant au moins une cavité à grand volume.

5. Élément de capote selon l'une des revendications 1 à 4, **caractérisé en ce que** l'élément en tôle (3 ; 16 ; 27) et l'élément en matière plastique (2 ; 15 ; 26) sont assemblés par collage, clinchage ou scellage.

6. Élément de capote selon l'une des revendications 1 à 5, **caractérisé en ce que** l'élément en tôle (3 ; 16 ; 27) est réalisé sous forme de pièce emboutie.

7. Élément de capote selon l'une des revendications 1 à 6, **caractérisé en ce que** l'élément en matière plastique (2 ; 15 ; 26) est réalisé sous forme de pièce moulée par de pièce emboutie ou de pièce stratifiée.

8. Élément de capote selon l'une des revendications 1 à 7, **caractérisé en ce que** l'élément en tôle (3 ; 16 ; 27) constitue la face inférieure ou intérieure de la capote de voiture décapotable et l'élément en matière plastique (2 ; 15 ; 26) la face supérieure ou extérieure de celle-ci, notamment lorsque la capote est déployée.

9. Élément de capote selon l'une des revendications 1 à 7, **caractérisé en ce que** l'élément en matière plastique (2 ; 15 ; 26) constitue la face inférieure ou intérieure de la capote de voiture décapotable et l'élément en tôle (3 ; 16 ; 27) la face supérieure ou extérieure de celle-ci, notamment lorsque la capote est déployée.

10. Élément de capote selon l'une des revendications 1 à 9, **caractérisé en ce qu'**il s'agit d'un arceau avant (1) de la capote de voiture décapotable, et **en ce que** l'élément en matière plastique (2) constitue une partie inférieure d'arceau avant et l'élément en tôle (3) une partie supérieure d'arceau avant.

11. Élément de capote selon la revendication 10, **caractérisé en ce que** l'élément en matière plastique (2) de l'arceau avant (1) présente un passage transversal essentiellement en forme de U (7).

12. Élément de capote selon l'une des revendications 1 à 11, **caractérisé en ce que** l'élément en matière plastique (2) présente des renforts et notamment des nervures de raidissement (9, 10).

13. Élément de capote selon l'une des revendications 1 à 12, **caractérisé en ce que** d'autres éléments sont intégrés dans l'élément composite.

14. Élément de capote selon l'une des revendications 1 à 13, **caractérisé en ce qu'**un élément en tôle supplémentaire est posé ou intégré dans l'élément en matière plastique (2 ; 15; 26).

15. Élément de capote selon l'une des revendications 1 à 14, **caractérisé en ce que** l'élément en matière plastique (2 ; 15 ; 26) est constitué d'une matière plastique qui, en se brisant, ne forme pour l'essentiel pas d'éclats.

16. Élément de capote selon l'une des revendications 1 à 15, **caractérisé en ce qu'**il s'agit d'une pièce d'une armature de capote, notamment d'un bras du toit, d'une bielle d'articulation, d'un montant principal, d'un arceau transversal, d'un arceau avant, d'un sommet du toit, ou d'un élément constitué par au moins deux de ces pièces d'armature.

17. Capote pour véhicule décapotable comprenant au moins un élément de capote constitué d'un élément en matière plastique (2 ; 15 ; 26) et d'un élément en tôle (3 ; 16 ; 27) formant un élément composite, **caractérisé en ce que** l'élément de capote est réalisé selon l'une des revendications 1 à 16 et est notamment un bras de toit, un bras de commande, un montant principal, un arceau transversal, un arceau avant ou un sommet de toit.
